# EUROPÄISCHE PATENTSCHRIFT

(11) **EP 3 010 789 B1**
(45) Veröffentlichungstag und Bekanntmachung des Hinweises auf die Patenterteilung: **24.07.2019**
(21) Anmeldenummer: 14730540.3
(22) Anmeldetag: 17.06.2014
(51) Int. Cl.: B62D 25/06, B62D 21/09, B60J 5/10

(54) **FAHRZEUGKAROSSERIE**
VEHICLE BODY
CARROSSERIE DE VÉHICULE

(30) Priorität: 19.06.2013 DE 102013211576
(43) Veröffentlichungstag der Anmeldung: 27.04.2016
(73) Patentinhaber: Bayerische Motoren Werke Aktiengesellschaft, 80809 München (DE)
(72) Erfinder: BARSCH, Sven, 82110 Germering (DE); STEIN, Michael, 85244 Roehrmoos (DE)
(86) Internationale Anmeldenummer: PCT/EP2014/062662
(87) Internationale Veröffentlichungsnummer: WO 2014/202574

(56) Entgegenhaltungen:
- WO-A1-02/070326
- DE-A1-102012 008 561
- US-A- 4 634 173

## Beschreibung

Vorliegende Erfindung betrifft eine Fahrzeugkarosserie in Schalenbauweise. Insbesondere betrifft die Erfindung eine Scharnierverstärkung am Heckfensterrahmen der Fahrzeugkarosserie.

Der Stand der Technik kennt unterschiedliche selbsttragende Fahrzeugkarosserien in Schalenbauweise (auch: Blechschalenbauweise). Charakteristisch für die Schalenbauweise ist, dass die unterschiedlichen Bestandteile der Karosserie, wie beispielsweise der Dachrahmen, die einzelnen Säulen oder die Schweller, jeweils aus einer Oberschale und einer Unterschale zusammengesetzt sind. Die zusammengesetzten Ober- und Unterschalen bilden dabei ein geschlossenes Profil mit einem Hohlraum. Die Ober-und Unterschalen werden auch als Außen- und Innenschalen bezeichnet.

Aus der US 4,634,173 A ist eine Fahrzeugkarosserie bekannt, mit einem Verstärkungsbauteil, das sich von einem rückwärtigen Dachblechabschnitt ("rear header 24") bis in einen seitlichen Rahmen erstreckt. Das Verstärkungsbauteil ist mehrteilig oder einstückig ausgebildet und weist einen als Scharnierverstärkung für ein Scharnier einer Heckklappe ausgebildeten Abschnitt auf, der als Hutprofil ausgebildet ist und auf den rückwärtigen Dachblechabschnitt aufgesetzt ist.

Es ist Aufgabe vorliegender Erfindung, eine Fahrzeugkarosserie in Schalenbauweise anzugeben, die bei kostengünstiger Herstellung und Montage möglichst betriebssicher, dauerfest und leichtbauend ist.

Die Lösung dieser Aufgabe erfolgt durch die Merkmale des unabhängigen Anspruchs 1. Die Unteransprüche haben vorteilhaften Ausgestaltungen der Erfindung zum Gegenstand.

Somit wird die Aufgabe gelöst durch eine Fahrzeugkarosserie in Schalenbauweise. Die Fahrzeugkarosserie umfasst zumindest einen seitlichen Rahmen und einen Heckfensterrahmen. An einem Knoten der Fahrzeugkarosserie ist der Heckfensterrahmen mit dem seitlichen Rahmen verbunden. Der seitliche Rahmen umfasst insbesondere einen Dachrahmen und eine hintere Säule der Fahrzeugkarosserie. Je nach Ausgestaltung geht der Dachrahmen direkt in die hintere Säule über, oder der Dachrahmen und die hintere Säule sind zwei einzelne, am Knoten miteinander verbundene Bestandteile der Fahrzeugkarosserie. Bei der hier betrachteten Fahrzeugkarosserie nimmt der Heckfensterrahmen nicht direkt die Fensterscheibe auf. Vielmehr wird am Heckfensterrahmen die Heckklappe befestigt.

Die erfindungsgemäße Fahrzeugkarosserie umfasst des Weiteren zumindest ein Verstärkungsbauteil. Das Verstärkungsbauteil erstreckt sich vom Heckfensterrahmen bis in den seitlichen Rahmen, also insbesondere bis in den Dachrahmen und/oder bis in die hintere Säule. Der Heckfensterrahmen und der seitliche Rahmen bestehen jeweils aus Oberschalen und Unterschalen. Das Verstärkungsbauteil ist dabei zwischen Ober- und Unterschale des Heckfensterrahmens und des seitlichen Rahmens angeordnet. Im Bereich des Heckfensterrahmens ist im Verstärkungsbauteil eine Scharnierverstärkung ausgebildet. Diese Scharnierverstärkung dient zum Anbinden eines Scharniers der Heckklappe. Erfindungsgemäß erstreckt sich das Verstärkungsbauteil von der Scharnierverstärkung aus bis in den seitlichen Rahmen. Das Verstärkungsbauteit wird also nicht nur zum Verstärken im Bereich der Scharnieranbindung genutzt, sondern stellt gleichzeitig auch eine Verstärkung im Bereich des Knotens und des seitlichen Rahmens dar. Dadurch ist es erfindungsgemäß möglich, mit nur einem Bauteil, nämlich dem Verstärkungsbauteil, sowohl die Scharnierverstärkung zu bilden, als auch im Bereich des seitlichen Rahmens sinnvoll und lokal auszusteifen. Dadurch ist ein kraftschlüssiger Verlauf vom Heckfensterrahmen in den seitlichen Rahmen und vom seitlichen Rahmen in den Heckfensterrahmen gewährleistet. Lokale Schwächen in der Steifigkeit im Bereich des Knotens werden durch die erfindungsgemäße Verwendung des Verstärkungsbauteils lokal verstärkt. Da nur ein Bauteil verwendet wird, um gleichzeitig die Scharnierverstärkung als auch die lokale Versteifung in dem seitlichen Rahmen darzustellen, vereinfacht sich die Montage und reduziert sich das Gewicht der Fahrzeugkarosserie.

Erfindungsgemäß erstreckt sich die Scharnierverstärkung quer durch den durch die Ober- und Unterschale gebildeten Hohlraum des Heckfensterrahmens und stützt dessen Oberschale gegenüber der Unterschale ab.

Im seitlichen Rahmen ist das Verstärkungsbauteil bevorzugt als Schott ausgebildet. Das Schott wird auch als Schottblech bezeichnet. Das Schott erstreckt sich quer durch den durch die Ober- und Unterschale gebildeten Hohlraum. Dabei stützt das Schott die Oberschale gegenüber der Unterschale ab. Das Verstärkungsbauteil weist also bevorzugt zwei Bereiche auf: Im ersten Bereich des Verstärkungsbauteils ist die Scharnierverstärkung ausgebildet. Dieser Bereich befindet sich zwischen Ober- und Unterschale des Heckfensterrahmens. Im zweiten Bereich ist das Verstärkungsbauteil als zumindest ein Schott ausgebildet. Dieses Schott befindet sich zwischen Ober-und Unterschale des seitlichen Rahmens und versteift in diesem Bereich den seitlichen Rahmen.

Darüber hinaus ist es bevorzugt vorgesehen, dass das Verstärkungsbauteil auch im Heckfensterrahmen einen als Schott ausgebildeten Bereich aufweist, um den Heckfensterrahmen zu versteifen.

Bevorzugt ist vorgesehen, dass der seitliche Rahmen einen Dachrahmen und eine Säule umfasst. Die Säule ist insbesondere die hintere Säule, beispielsweise die C-Säule oder die D-Säule, der Fahrzeugkarosserie. Sowohl der Dachrahmen als auch die Säule sind aus einer Oberschale und einer Unterschale zusammengesetzt. An dem Knoten laufen der Dachrahmen, die hintere Säule und der Heckfensterrahmen zusammen. Das Verstärkungsbauteil erstreckt sich aus dem Heckfensterrahmen bis in den Dachrahmen und/oder bis in die hintere Säule. Dadurch ist eine ausreichende Versteifung des Knotenbereiches möglich.

Das Verstärkungsbauteil ist bevorzugt mit der Oberschale und/oder mit der Unterschale des Heckfensterrahmens verschweißt und/oder vernietet und/oder verklebt und/oder verlötet. Des Weiteren ist bevorzugt vorgesehen, dass das Verstärkungsbauteil mit der Oberschale und/oder mit der Unterschale des seitlichen Rahmens, also insbesondere des Dachrahmens und/oder der hinteren Säule, verschweißt und/oder vernietet und/oder verklebt und/oder verlötet ist. Dadurch ist eine dauerfeste Versteifung der Fahrzeugkarosserie mittels des Verstärkungsbauteils möglich.

An der Scharnierverstärkung liegt das Verstärkungsbauteil bevorzugt an einer Innenseite der Oberschale des Heckfensterrahmens flächig an. Dadurch ist ein relativ steifer Bereich gebildet, an dem das Scharnier befestigt werden kann.

Das Verstärkungsbauteil ist bevorzugt einstückig ausgebildet. Alternativ dazu ist es möglich, das Verstärkungsbauteil aus mehreren Einzelteilen zusammenzusetzen. Die Einzelteile sind dabei fest und direkt miteinander verbunden.

Die Ober- und Unterschalen sowie das Verstärkungsbauteil sind vorzugsweise aus umgeformten Blechen hergestellt.

Die Erfindung umfasst des Weiteren ein Kraftfahrzeug, vorzugsweise mit zumindest vier Rädern. Das Kraftfahrzeug umfasst eine der soeben beschriebenen Fahrzeugkarosserien und eine Heckklappe. Die Heckklappe ist über zumindest ein Scharnier an der Scharnierverstärkung angebunden.

Bevorzugt ist umfasst die Fahrzeugkarosserie bzw. das Kraftfahrzeug zwei Verstärkungsbauteile für zwei Scharniere der Heckklappe.

Weitere Einzelheiten, Merkmale und Vorteile der Erfindung ergeben sich aus der nachfolgenden Beschreibung und den Figuren. Es zeigen:
- Figur 1: eine erfindungsgemäße Fahrzeugkarosserie gemäß einem ersten Ausführungsbeispiel,
- Figur 2: eine Detailansicht zu Figur 1,
- Figur 3: eine schematische Detailansicht zu Figur 1,
- Figur 4: eine Schnittansicht zu Figur 1,
- Figur 5: ein Detail einer erfindungsgemäßen Fahrzeugkarosserie gemäß einem zweiten Ausführungsbeispiel,
- Figur 6: ein Detail einer erfindungsgemäßen Fahrzeugkarosserie gemäß einem dritten Ausführungsbeispiel, und
- Figur 7: ein Detail einer erfindungsgemäßen Fahrzeugkarosserie gemäß einem vierten Ausführungsbeispiel.

Im Folgenden werden vier Ausführungsbeispiele einer Fahrzeugkarosserie 1 beschrieben. Gleiche bzw. funktional gleiche Bauteile sind in allen Ausführungsbeispielen mit denselben Bezugszeichen versehen.

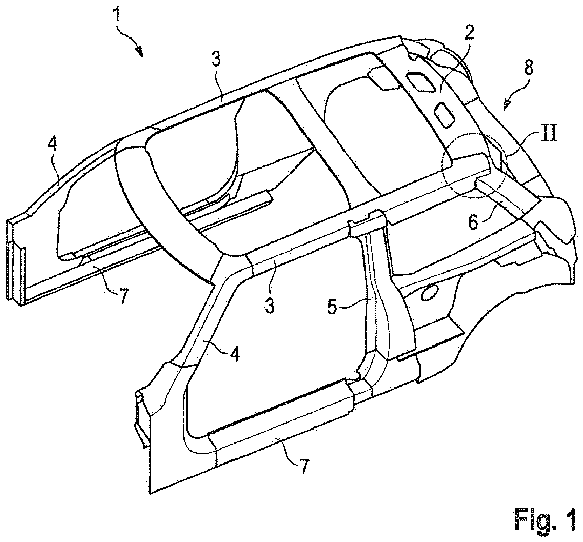

Figuren 1 bis 4 zeigen das erste Ausführungsbeispiel der Fahrzeugkarosserie 1.

Die Fahrzeugkarosserie 1 umfasst einen Heckfensterrahmen 2, der an seinen Enden jeweils mit einem Dachrahmen 3 verbunden ist. Im unteren Bereich verlaufen zwei parallele Schweller 7. Die Schweller 7 sind über A-Säulen 4, B-Säulen 5 und C-Säulen 6 mit den Dachrahmen 3 verbunden. Der jeweilige Dachrahmen 3 mit der sich anschießenden C-Säule 6 wird als seitlicher Rahmen 8 bezeichnet.

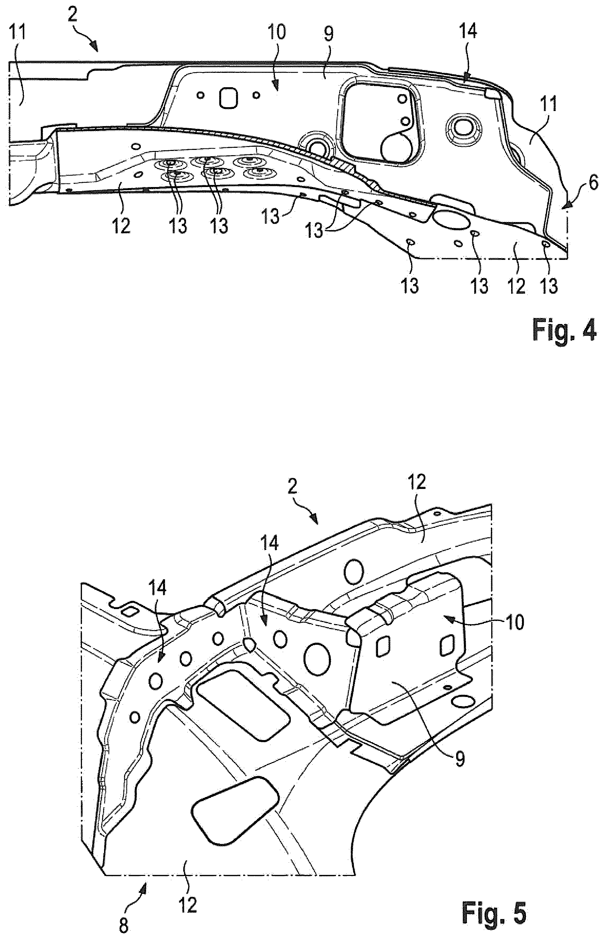

Die Fahrzeugkarosserie 1 ist in Blechschalenbauweise aufgebaut. Die einzelnen Bestandteile, insbesondere der Heckfensterrahmen 2, der Dachrahmen 3, die A-, B- und C-Säulen 4, 5, 6 und die Schweller 7 sind jeweils aus einer Oberschale 11 und einer Unterschale 12 (siehe Figur 4) zusammengesetzt.

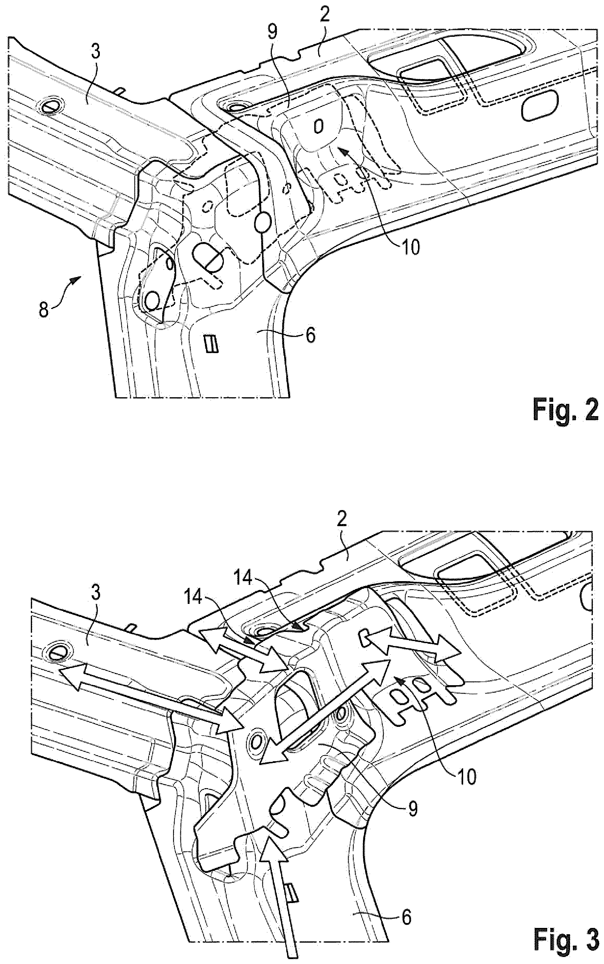

In Figur 1 ist mit II ein hinterer Knoten der Fahrzeugkarosserie 1 gekennzeichnet. Dieses Detail II zeigen die Figuren 2 bis 4.

Figur 2 zeigt ein Verstärkungsbauteil 9, gebildet aus einem umgeformten Blech, das sich vom Heckfensterrahmen 2 bis in den seitlichen Rahmen 8 erstreckt. Das Verstärkungsbauteil 9 befindet sich sowohl im Heckfensterrahmen 2 als auch im seitlichen Rahmen 8 jeweils zwischen Ober-und Unterschale 11, 12. Im Bereich des Heckfensterrahmens 2 weist das Verstärkungsbauteil 9 eine Scharnierverstärkung 10 auf. An dieser Scharnierverstärkung 10 kann ein Scharnier für eine Heckklappe angebunden werden. Im Bereich des seitlichen Rahmens 8 dient das Verstärkungsbauteil 9 als lokale Aussteifung.

Figur 3 zeigt eine schematische Ansicht, in der das Verstärkungsbauteil 9 hervorgehoben dargestellt ist. Wie bereits beschrieben, befindet sich das Verstärkungsbauteil 9 tatsächlich zwischen Oberschalen 11 und Unterschalen 12. Rechts der in Figur 3 dargestellten gestrichelten Linie ist das Verstärkungsbauteil 9 als Scharnierverstärkung 10 ausgebildet. Links der gestrichelten Linie ist das Verstärkungsbauteil 9 als Schott 14 ausgebildet, Als Schott 14 erstreckt sich das Verstärkungsbauteil 9 zwischen Oberschale 11 und Unterschale 12 im Bereich des seitlichen Rahmens 8. Dadurch stützt das Verstärkungsbauteil 9 die Oberschale 11 gegenüber der Unterschale 12 ab.

Figur 3 zeigt des Weiteren verschiedene Lastpfade, dargestellt durch Pfeile. Erfindungsgemäß wird ein durchgehendes Bauteil, nämlich das Verstärkungsbauteil 9 verwendet. Das Verstärkungsbauteil 9 erstreckt sich vom Heckfensterrahmen 2 bis in den seitlichen Rahmen 8, also bis in den Dachrahmen 3 und/oder die C-Säule 6. Dadurch sind über den gesamten Knotenbereich durchgehende Lastpfade möglich. Mit nur einem Verstärkungsbauteil 9 werden mehrere Funktionen erfüllt: Zum einen dient die Scharnierverstärkung 10 zur Anbindung des Scharniers der Heckklappe. Zum anderen sorgt die Ausbildung des Verstärkungsbauteils 9 als Schott 14 für eine Aussteifung der Fahrzeugkarosserie 1 in diesem Bereich.

Figur 4 zeigt einen Schnitt durch das Detail II. Dabei ist gut zu sehen, dass sich das Verstärkungsbauteil 9 jeweils zwischen Oberschale 11 und Unterschale 12 befindet. Darüber hinaus zeigt Figur 4 die feste Verbindung des Verstärkungsbauteils 9 mit dem Heckfensterrahmen 2 und dem seitlichen Rahmen 8 über Schweißpunkte 13. Insbesondere im Bereich des Schotts 14 liegt das Verstärkungsbauteil 9 nicht flächig an der Oberschale 11 oder Unterschale 12 an, sondern erstreckt sich quer durch den Hohlraum, so dass eine gute Abstützung der Oberschale 11 gegenüber der Unterschale 12 möglich ist.

Die Figuren 5 bis 7 zeigen weitere Ausführungsbeispiele der Fahrzeugkarosserie 1. Gezeigt ist jeweils ein hinterer Knoten, an dem der Heckfensterrahmen 2 mit dem seitlichen Rahmen 8 verbunden ist. In den Ausführungsbeispielen gemäß den Figuren 5 bis 7 geht der Dachrahmen 3 direkt in die hintere Säule (C-Säule 6) über. Für eine übersichtliche Darstellung sind in den Figuren 5 bis 7 die Oberschalen 11 ausgeblendet.

Das zweite Ausführungsbeispiel gemäß Figur 5 zeigt eine Ausbildung des Verstärkungsbauteils 9 mit einer Scharnierverstärkung 10 und zwei Schotts 14. Eines der Schotts 14 befindet sich dabei im Heckfensterrahmen 2. Das zweite Schott 14 versteift den seitlichen Rahmen 8. Die beiden Schotts 14 sind als einstückiges gebogenes Biechteil ausgebildet. Die Scharnierverstärkung 10 ist mit dem angrenzenden Schott 14 verschweißt.

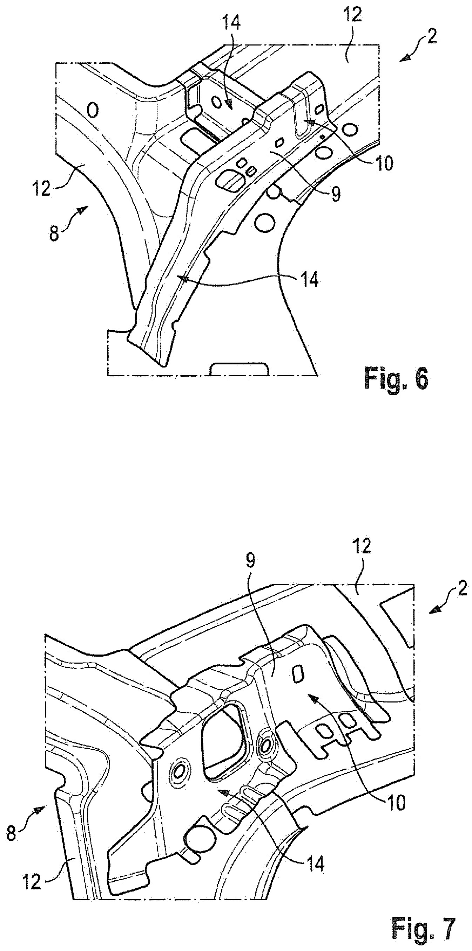

Im dritten Ausführungsbeispiel gemäß Figur 6 ist ein Schott 14 im seitlichen Rahmen 8 vorgesehen, das direkt übergeht in die Scharnierverstärkung 10. An die Scharnierverstärkung 10 ist ein weiteres Schott 14 angeschweißt, das den Heckfensterrahmen 2 lokal versteift.

Im vierten Ausführungsbeispiel gemäß Figur 7 umfasst das Verstärkungsbauteil 9 eine Scharnierverstärkung 10 und ein Schott 14 im seitlichen Rahmen 8.

### Bezugszeichenliste:

- 1: Fahrzeugkarosserie
- 2: Heckfensterrahmen
- 3: Dachrahmen
- 4: A-Säule
- 5: B-Säule
- 6: C-Säule (hintere Säule)
- 7: Schweller
- 8: Seitlicher Rahmen
- 9: Verstärkungsbauteil
- 10: Scharnierverstärkung
- 11: Oberschale
- 12: Unterschale
- 13: Schweißpunkte
- 14: Schott

## Patentansprüche

1. Fahrzeugkarosserie (1) in Schalenbauweise, umfassend zumindest
- einen seitlichen Rahmen (8),
- einen Heckfensterrahmen (2), der an einem Knoten der Fahrzeugkarosserie (1) mit dem seitlichen Rahmen (8) verbunden ist, und
- ein Verstärkungsbauteil (9), das sich vom Heckfensterrahmen (2) bis in den seitlichen Rahmen (8) erstreckt,
- wobei der Heckfensterrahmen (2) und der seitliche Rahmen (8) jeweils aus einer Oberschale (11) und einer Unterschale (12) zusammengesetzt sind,
- wobei das Verstärkungsbauteil (9) zwischen den Ober- und Unterschalen (11, 12) des Heckfensterrahmens (2) und des seitlichen Rahmens (8) angeordnet ist,
- wobei im Bereich des Heckfensterrahmens (2) im Verstärkungsbauteil (9) eine Scharnierverstärkung (10) für ein Scharnier einer Heckklappe ausgebildet ist,
- **dadurch gekennzeichnet, dass** sich die Scharnierverstärkung (10) quer durch den durch die Ober- und Unterschale (11, 12) gebildeten Hohlraum erstreckt und die Oberschale (11) gegenüber der Unterschale (12) abstützt.

2. Fahrzeugkarosserie nach Anspruch 1, **dadurch gekennzeichnet, dass** das Verstärkungsbauteil (9) im seitlichen Rahmen (8) als Schott (14) ausgebildet ist, wobei sich das Schott (14) durch den zwischen Ober-und Unterschale (11, 12) ausgebildeten Hohlraum erstreckt, um die Oberschale (11) gegenüber der Unterschale (12) abzustützen.

3. Fahrzeugkarosserie nach Anspruch 2, **dadurch gekennzeichnet, dass** das Verstärkungsbauteil (9) auch im Heckfensterrahmen (2) einen als Schott (14) ausgebildeten Bereich aufweist, um den Heckfensterrahmen (2) zu versteifen.

4. Fahrzeugkarosserie nach einem der vorhergehenden Ansprüche, **dadurch gekennzeichnet, dass** der seitliche Rahmen (8) einen Dachrahmen (3) und eine Säule (6) umfasst, wobei der Dachrahmen (3) und die Säule (6) jeweils aus einer Oberschale (11) und einer Unterschale (12) zusammengesetzt sind, und wobei sich das Verstärkungsbauteil (9) bis in den Dachrahmen (3) und/oder bis in die Säule (6) erstreckt.

5. Fahrzeugkarosserie nach einem der vorhergehenden Ansprüche, **dadurch gekennzeichnet, dass** das Verstärkungsbauteil (9) mit der Oberschale (11) und/oder mit der Unterschale (12) des Heckfensterrahmens (2) verschweißt und/oder vernietet und/oder verklebt und/oder verlötet ist.

6. Fahrzeugkarosserie nach einem der vorhergehenden Ansprüche, **dadurch gekennzeichnet, dass** das Verstärkungsbauteil (9) mit der Oberschale (11) und/oder mit der Unterschale (12) des seitlichen Rahmens (8), insbesondere des Dachrahmens (3) und/oder der Säule (6), verschweißt und/oder vernietet und/oder verklebt und/oder verlötet ist.

7. Fahrzeugkarosserie nach einem der vorhergehenden Ansprüche, **dadurch gekennzeichnet, dass** das Verstärkungsbauteil (9) an der Scharnierverstärkung (10) an einer Innenseite der Oberschale (11) des Heckfensterrahmens (2) flächig anliegt.

8. Fahrzeugkarosserie nach einem der vorhergehenden Ansprüche, **dadurch gekennzeichnet, dass** das Verstärkungsbauteil (9) einstückig ausgebildet ist, oder dass das Verstärkungsbauteil (9) aus mehreren, fest und direkt miteinander verbundenen Teilen besteht.

9. Fahrzeugkarosserie nach einem der vorhergehenden Ansprüche, **gekennzeichnet durch** zumindest ein Scharnier für eine Heckklappe, wobei das Scharnier an der Scharnierverstärkung (10) angebracht ist.

10. Fahrzeugkarosserie nach einem der vorhergehenden Ansprüche, **dadurch gekennzeichnet, dass** die Ober- und Unterschalen (11, 12) und das Verstärkungsbauteil (9) aus umgeformten Blechen hergestellt sind.

11. Kraftfahrzeug, vorzugsweise mit zumindest vier Rädern, umfassend eine Fahrzeugkarosserie (1) nach einem der vorhergehenden Ansprüche und eine Heckklappe, die über zumindest ein Scharnier an der Scharnierverstärkung (10) angebunden ist.

## Claims

1. Vehicle body (1) with a shell-type design, comprising at least
- a lateral frame (8),
- a rear window frame (2) which is connected to the lateral frame (8) at a node of the vehicle body (1) and
- a reinforcing component (9) which extends from the rear window frame (2) into the lateral frame (8),
- with the rear window frame (2) and the lateral frame (8) each being composed of an upper shell (11) and a lower shell (12),
- with the reinforcing component (9) being arranged between the upper and lower shells (11, 12) of the rear window frame (2) and the lateral frame (8),
- with a hinge reinforcement (10) for a hinge of a tailgate being formed in the reinforcing component (9) in the region of the rear window frame (2),
- **characterised in that**
the hinge reinforcement (10) extends transversely
through the cavity formed by the upper and lower shells (11, 12) and supports the upper shell (11) against the lower shell (12).

2. Vehicle body according to Claim 1, **characterised in that** the reinforcing component (9) in the lateral frame (8) is in the form of a bulkhead (14), with the bulkhead (14) extending through the cavity formed between the upper and lower shells (11, 12) in order to support the upper shell (11) against the lower shell (12).

3. Vehicle body according to Claim 2, **characterised in that** the reinforcing component (9) also has an area in the form of a bulkhead (14) in the rear window frame (2) in order to strengthen the rear window frame (2).

4. Vehicle body according to one of the preceding claims, **characterised in that** the lateral frame (8) comprises a roof frame (3) and a column (6), the roof frame (3) and column (6) in each case being composed of an upper shell (11) and a lower shell (12), with the reinforcing component (9) extending into the roof frame (3) and/or into the column (6).

5. Vehicle body according to one of the preceding claims, **characterised in that** the reinforcing component (9) is welded and/or riveted and/or adhesively bonded and/or soldered with the upper shell (11) and/or with the lower shell (12) of the rear window frame (2).

6. Vehicle body according to one of the preceding claims, **characterised in that** the reinforcing component (9) is welded and/or riveted and/or adhesively bonded and/or soldered with the upper shell (11) and/or with the lower shell (12) of the lateral frame (8), in particular the roof frame (3) and/or the column (6).

7. Vehicle body according to one of the preceding claims, **characterised in that** the reinforcing component (9) on the hinge reinforcement (10) lies flat against an inner side of the upper shell (11) of the rear window frame (2).

8. Vehicle body according to one of the preceding claims, **characterised in that** the reinforcing component (9) is formed in one piece or that the reinforcing component (9) comprises several parts that are firmly and directly connected to one another.

9. Vehicle body according to one of the preceding claims, **characterised by** at least one hinge for a tailgate, with the hinge being attached to the hinge reinforcement (10).

10. Vehicle body according to one of the preceding claims, **characterised in that** the upper and lower shells (11, 12) and the reinforcing component (9) are made of formed metal sheets.

11. Motor vehicle, preferably with at least four wheels, comprising a vehicle body (1) according to one of the preceding claims and a tailgate which is connected to the hinge reinforcement (10) by at least one hinge.

## Revendications

1. Carrosserie de véhicule (1) réalisée selon une construction de coque comprenant au moins :
- un cadre latéral (8),
- un cadre de lunette arrière (2) qui est relié au cadre latéral (8) au niveau d'un noeud de la carrosserie du véhicule (1),
- un élément de renfort (9) qui s'étend du cadre de lunette arrière (2) jusqu'au cadre latéral (8),
le cadre de lunette arrière (2) et le cadre latéral (8) étant respectivement constitués par l'assemblage d'une coque supérieure (11) et d'une coque inférieure (12),
l'élément de renfort (9) étant situé entre la coque supérieure et la coque inférieure (11, 12) du cadre de lunette arrière (2) et du cadre latéral (8),
dans la zone du cadre de lunette arrière (2) étant réalisé dans l'élément de renfort (9) un renfort de charnière (10) destiné à une charnière d'un hayon,
**caractérisée en ce que**
le renfort de charnière (10) s'étend transversalement au travers du volume creux défini par la coque supérieure et la coque inférieure (11, 12) et supporte la coque supérieure (11) par rapport à la coque inférieure (12).

2. Carrosserie de véhicule conforme à la revendication 1,
**caractérisée en ce que**
l'élément de renfort (9) est réalisé sous la forme d'une cloison (14), dans le cadre latéral (8) la cloison (14) s'étendant au travers du volume creux défini entre la coque supérieure et la coque inférieure (11, 12) pour supporter la coque supérieure (11) par rapport à la coque inférieure (12).

3. Carrosserie de véhicule conforme à la revendication 2,
**caractérisée en ce que**
l'élément de renfort (9) comporte également dans le cadre de lunette arrière (2) une zone réalisée sous la forme d'une cloison (14) permettant de renforcer le cadre de lunette arrière (2).

4. Carrosserie de véhicule conforme à l'une des revendications précédentes,
**caractérisée en ce que**
le cadre latéral (8) comporte un cadre de toit (3) et une colonne (6), et le cadre de toit (3) et la colonne (6) sont respectivement constitués par l'assemblage d'une coque supérieure (11) et d'une coque inférieure (12), l'élément de renfort (9) s'étendant jusqu'au cadre de toit (3) et/ou jusqu'à la colonne (6).

5. Carrosserie de véhicule conforme à l'une des revendications précédentes,
**caractérisée en ce que**
l'élément de renfort (9) est soudé et/ou rivé et/ou collé et/ou brasé avec la coque supérieure (11) et/ou avec la coque inférieure (12) du cadre de lunette arrière (2).

6. Carrosserie de véhicule conforme à l'une des revendications précédentes,
**caractérisée en ce que**
l'élément de renfort (9) est soudé et/ou rivé et/ou collé et/ou brasé avec la coque supérieure (11) et/ou avec la coque inférieure (12) du cadre latéral (8), en particulier du cadre de toit (3) et/ou de la colonne (6).

7. Carrosserie de véhicule conforme à l'une des revendications précédentes,
**caractérisée en ce que**
l'élément de renfort (9) s'applique à plat sur le renfort de charnière (10) sur la face interne de la coque supérieure (11) du cadre de lunette arrière (2).

8. Carrosserie de véhicule conforme à l'une des revendications précédentes,
**caractérisée en ce que**
l'élément de renfort (9) est réalisé en une seule pièce ou est constitué de plusieurs parties reliées solidairement et directement entre elles.

9. Carrosserie de véhicule conforme à l'une des revendications précédentes,
**caractérisée par**
au moins une charnière destinée à un hayon, la charnière étant montée sur le renfort de charnière (10).

10. Carrosserie de véhicule conforme à l'une des revendications précédentes,
**caractérisée en ce que**
la coque supérieure et la coque inférieure (11, 12) ainsi que l'élément de renfort (9) sont réalisés à partir de tôles mises en forme.

11. Véhicule, en particulier véhicule à au moins quatre roues comprenant une carrosserie (1) conforme à l'une des revendications précédentes ainsi qu'un hayon qui est lié au renfort de charnière (10) par l'intermédiaire d'au moins une charnière.
